# EUROPEAN PATENT APPLICATION

(11) **EP 4 273 814 A1**
(43) Date of publication of application: **08.11.2023**
(21) Application number: 23171844.6
(22) Date of filing: 05.05.2023
(51) Int. Cl.: G06V 20/56, G06V 10/40, G06V 10/82, G06V 10/74

(54) **METHOD AND SYSTEM FOR SELECTING DATA FOR PREDETERMINED SCENARIO BY FILTERING**

(30) Priority: 07.05.2022 CN 202210491548
(71) Applicant: Anhui NIO Autonomous Driving Technology Co., Ltd., Hefei, Anhui 230601 (CN)
(72) Inventor: CHEN, Weijun, Hefei, Anhui (CN); LIU, Guoyi, Hefei, Anhui (CN); SHE, Xiaoli, Hefei, Anhui (CN); REN, Shaoqing, Hefei, Anhui (CN)
(74) Representative: Vossius & Partner Patentanwälte Rechtsanwälte mbB

(57) **Abstract**

The invention relates to a method and system for selecting data for a predetermined scenario by filtering. The method includes: receiving a set of perception data from one or more signal sources; performing multimodal fusion on the set of perception data to generate multimodal serialized data; extracting features from the multimodal serialized data and encoding them to generate encoded information; receiving target encoded information, wherein the target encoded information is generated based on perception data for the predetermined scenario; and performing similarity matching between the encoded information and the target encoded information, and determining, based on a matching result, whether to retain the set of perception data.

## Description

### Technical Field

The invention relates to the field of vehicle data processing, and in particular, to a method and system for selecting data for a predetermined scenario by filtering, a method and system for generating target encoded information for a predetermined scenario, and a computer-readable storage medium.

### Background Art

Data has always been an important resource in the field of artificial intelligence. For the field of autonomous driving, some open source datasets are not of great value to the autonomous driving algorithm because scenarios where the vehicle are used are quite different from most natural scenarios. Directly collecting data by vehicles and selecting some valuable data therefrom by filtering will consume a lot of storage, bandwidth, manpower and other costs. For example, because it is difficult to reuse filters for different scenarios, if separate filtering rules are designed for data filtering for those scenarios, a large set of filters needs to be maintained, which will significantly increase the workload.

In view of this, there is a need to propose an improved data filtering mechanism.

### Summary

Embodiments of the invention provide a method and system for selecting data for a predetermined scenario by filtering, a method and system for generating target encoded information for a predetermined scenario, and a computer-readable storage medium, for extracting various data generated by a vehicle in the predetermined scenario.

According to an aspect of the invention, there is provided a method for selecting data for a predetermined scenario by filtering. The method includes: receiving a set of perception data from one or more signal sources; performing multimodal fusion on the set of perception data to generate multimodal serialized data; extracting features from the multimodal serialized data and encoding them to generate encoded information; receiving target encoded information, where the target encoded information is generated based on perception data for the predetermined scenario; and performing similarity matching between the encoded information and the target encoded information, and determining, based on a matching result, whether to retain the set of perception data.

In some embodiments of the invention, optionally, the predetermined scenario is any one or a combination of the following: overtaking, avoiding, accelerating, decelerating, changing lanes, emergency stop, and lane line missing.

In some embodiments of the invention, optionally, the one or more signal sources include at least one of the following: signal sources configured to detect a surrounding environment: an image sensor and a LiDAR; signal sources configured to indicate vehicle states: a speed sensor, an acceleration sensor, an accelerator pedal position sensor, a brake pedal position sensor, and a steering angle sensor.

In some embodiments of the invention, optionally, performing multimodal fusion on the set of perception data to generate multimodal serialized data includes: abstracting a part of the set of perception data from the signal sources configured to detect the surrounding environment as first feature data; abstracting a part of the set of perception data from the signal sources configured to indicate vehicle states as second feature data; and performing feature fusion on the first feature data and the second feature data to generate the multimodal serialized data.

In some embodiments of the invention, optionally, determining, based on a matching result, whether to retain the set of perception data includes: retaining the set of perception data if a similarity between the encoded information and the target encoded information is greater than or equal to a threshold.

In some embodiments of the invention, optionally, the method further includes: sending the set of perception data for the predetermined scenario for further processing.

In some embodiments of the invention, optionally, the multimodal fusion, the feature extraction, and the encoding are based on a transformer neural network.

In some embodiments of the invention, optionally, the target encoded information is generated based on the perception data with a preset length for the predetermined scenario, and receiving a set of perception data from one or more signal sources includes: receiving a perception data stream from one or more signal sources; dividing the perception data stream into a plurality of sets of perception data based on the preset length; and extracting a set of perception data from the plurality of sets of perception data.

According to another aspect of the invention, there is provided a system for selecting data for a predetermined scenario by filtering. The system includes: an abstractor configured to receive a set of perception data from one or more signal sources, and abstract the set of perception data into corresponding feature data; a fusioner configured to fuse the feature data to generate multimodal serialized data; an extractor configured to extract fused features from the multimodal serialized data; an encoder configured to encode the fused features to generate encoded information; and a matcher configured to perform similarity matching between the encoded information and target encoded information, and determine, based on a matching result, whether to retain the set of perception data, where the target encoded information is generated based on perception data for the predetermined scenario.

According to another aspect of the invention, there is provided a method for generating target encoded information for a predetermined scenario, where the target encoded information is used for extracting perception data for the predetermined scenario. The method includes: receiving a plurality of sets of perception data, where each of the plurality of sets of perception data is generated by one or more signal sources in the predetermined scenario and has a preset length; performing multimodal fusion on each of the plurality of sets of perception data to generate a plurality of sets of multimodal serialized data; extracting features from each of the plurality of sets of multimodal serialized data and encoding them to generate a plurality of sets of encoded information; and performing weighted averaging on each of the plurality of sets of encoded information to generate the target encoded information.

According to another aspect of the invention, there is provided a system for generating target encoded information for a predetermined scenario, where the target encoded information is used for extracting perception data for the predetermined scenario. The system includes: an abstractor configured to receive a plurality of sets of perception data, and abstract each of the plurality of sets of perception data into corresponding feature data, where each of the plurality of sets of perception data is generated by one or more signal sources in the predetermined scenario and has a preset length; a fusioner configured to perform multimodal fusion on the feature data corresponding to each set of perception data to generate a plurality of sets of multimodal serialized data; an extractor configured to extract fused features from each of the plurality of sets of multimodal serialized data; an encoder configured to encode the fused features separately to generate a plurality of sets of encoded information; and a generator configured to perform weighted averaging on each of the plurality of sets of encoded information to generate the target encoded information.

According to another aspect of the invention, there is provided a computer-readable storage medium having instructions stored therein, where the instructions, when executed by a processor, cause the processor to perform any one of the methods as described above.

### Brief Description of the Drawings

The above and other objectives and advantages of the invention will be more thorough and clearer from the following detailed description in conjunction with the drawings, where the same or similar elements are represented by the same reference numerals.
FIG. 1 shows a method for selecting data for a predetermined scenario by filtering according to an embodiment of the invention;
FIG. 2 shows a system for selecting data for a predetermined scenario by filtering according to an embodiment of the invention;
FIG. 3 shows a method for generating target encoded information for a predetermined scenario according to an embodiment of the invention; and
FIG. 4 shows a system for generating target encoded information for a predetermined scenario according to an embodiment of the invention.

### Detailed Description of Embodiments

For the sake of brevity and illustrative purposes, the principles of the invention are mainly described herein with reference to its exemplary embodiments. However, those skilled in the art can easily appreciate that the same principle can be equivalently applied to all types of methods and systems for selecting data for a predetermined scenario by filtering, methods and systems for generating target encoded information for a predetermined scenario, and computer-readable storage media, and a same or similar principle can be implemented. These variations do not depart from the true spirit and scope of this invention.

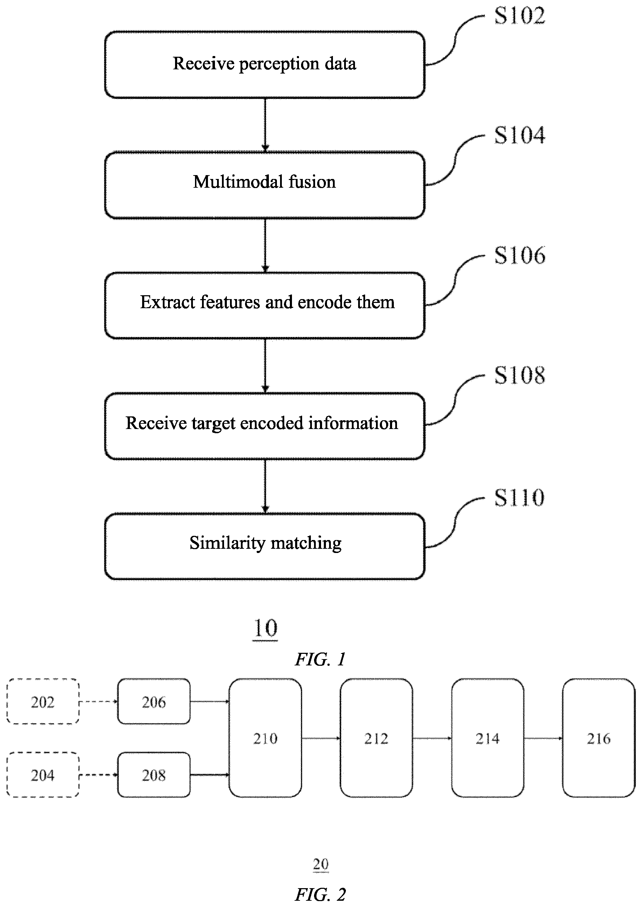

An aspect of the invention provides a method for selecting data for a predetermined scenario by filtering. As shown in FIG. 1, a method 10 for selecting data for a predetermined scenario by filtering (hereinafter referred to as the method 10) includes the following steps: step S102: receiving a set of perception data from one or more signal sources; step S104: performing multimodal fusion on the set of perception data to generate multimodal serialized data; step S106: extracting features from the multimodal serialized data and encoding them to generate encoded information; step S108: receiving target encoded information; and step S110: performing similarity matching between the encoded information and the target encoded information, and determining, based on a matching result, whether to retain the set of perception data.

In some embodiments of the invention, the method 10 may be used in the following predetermined scenarios: overtaking, avoiding, accelerating, decelerating, changing lanes, emergency stop, and lane line missing. The method 10 may be used to select data for a single scenario by filtering. For example, the method 10 may extract perception data related to the scenario of "lane line missing" from a series of data. The method 10 may also be used to select data for a composite scenario. For example, the method 10 may extract perception data related to a scenario of "avoiding" and then "overtaking" from a series of data. Certainly, in addition to the scenarios listed above, the method 10 may be applied to other specific scenarios that can be derived through empirical methods such as induction and classification.

In the method 10, a set of perception data is received from one or more signal sources (abbreviated as "Receive perception data" in FIG. 1) in step S102. In some embodiments of the invention, these signal sources may be either signal sources configured to detect a surrounding environment, for example, an image sensor, a LiDAR (Laser Detection and Ranging), etc.; or signal sources configured to indicate vehicle states, for example, a speed sensor, an acceleration sensor, an accelerator pedal position sensor, a brake pedal position sensor, a steering angle sensor, etc. The set of perception data received in step S 102 is generated by one or more signal sources within the same time period, thus ensuring a time correspondence between the data from the signal sources. In addition, the perception data may have a fixed length, so as to facilitate subsequent processing of the fixed-length data in a fixed manner. For example, a neural network used for processing needs to receive fixed-length data.

In the method 10, multimodal fusion is performed on the set of perception data to generate multimodal serialized data in step S 104 (abbreviated as "Multimodal fusion" in FIG. 1). The multimodal fusion technology can extract information from different modalities and integrate them into a stable multimodal representation. The principle of using the technology may be implemented according to the prior art, and details are not repeated in the invention. In some embodiments of the invention, the process of multimodal fusion may be implemented by using a transformer neural network.

In some embodiments of the invention, specifically, performing multimodal fusion on the set of perception data to generate multimodal serialized data in step S 104 may include the following steps: abstracting a part of the set of perception data received in step S 102 from the signal sources configured to detect the surrounding environment as first feature data; abstracting a part of the set of perception data from the signal sources configured to indicate vehicle states as second feature data; and performing feature fusion on the first feature data and the second feature data to generate the multimodal serialized data. Since the signal sources configured to detect the surrounding environment mainly senses a target, and the signal sources configured to indicate vehicle states mainly senses a vehicle's own states, abstracting data from the two based on attributes of the data is conducive to generating multimodal serialized data.

In the method 10, features are extracted from the multimodal serialized data and encoded to generate encoded information in step S106 (abbreviated as "Extract features and encode them" in FIG. 1). For example, a one-dimensional vector may be formed based on the extracted features and used as encoded information. The process of extracting features from multimodal serialized data and performing embedded encoding may also be implemented according to the prior art, and details are not repeated in the invention. In some embodiments of the invention, the process of feature extraction and encoding may be implemented by using a transformer neural network.

In the method 10, target encoded information is received in step S108. The target encoded information is generated based on perception data for the predetermined scenario, that is, the target encoded information is generated based on the known perception data for the predetermined scenario and according, at least in part, to the above steps S 102-S 106. Therefore, the target encoded information reflects the features of the predetermined scenario, and other data (such as the perception data received in step S102) may also be considered as coming from the predetermined scenario if they have the same or similar features.

In the method 10, similarity matching is performed on the encoded information and the target encoded information and whether to retain the set of perception data is determined based on a matching result in step S110 (abbreviated as "Similarity matching" in FIG. 1). In some embodiments of the invention, for example, if a similarity between the encoded information and the target encoded information is greater than or equal to a threshold, it indicates that the set of perception data received in step S102 is highly correlated with the predetermined scenario, and thus the set of perception data can be retained.

In some embodiments of the invention, the method 10 further includes the following steps (not shown in FIG. 1): sending the set of perception data to an external device (for example, a server for processing data) for the predetermined scenario for further processing. For example, the server for processing data may receive the set of perception data to formulate a policy for autonomous driving in a predetermined scenario.

In some embodiments of the invention, the target encoded information is generated based on the perception data with a preset length for the predetermined scenario, and receiving a set of perception data from one or more signal sources in step S102 includes: receiving a perception data stream from one or more signal sources; dividing the perception data stream into a plurality of sets of perception data based on the preset length; and receiving a set of perception data of the plurality of sets of perception data. Through this process, the continuously received perception data stream can be divided into a plurality of sets of perception data with the same length, thus facilitating subsequent processing.

Another aspect of the invention provides a system for selecting data for a predetermined scenario by filtering. As shown in FIG. 2, a system 20 for selecting data for a predetermined scenario by filtering (hereinafter referred to as the system 20) includes abstractors 206 and 208, a fusioner 210, an extractor 212, an encoder 214, and a matcher 216. Signal sources 202 and 204 are also shown in FIG. 2 in order to clearly illustrate the principles of the invention. For example, the signal source 202 may be various signal sources configured to detect a surrounding environment, and the signal source 204 may be various signal sources configured to indicate vehicle states. The system 20 may be arranged at the vehicle side, so as to facilitate data filtering.

The abstractors 206 and 208 of the system 20 are configured to receive a set of perception data from one or more signal sources and abstract the set of perception data into corresponding feature data. For example, the abstractor 206 may be configured to process data from the signal sources configured to detect the surrounding environment, while the abstractor 208 may be configured to process data from the signal sources configured to indicate vehicle states. Since the signal sources configured to detect the surrounding environment mainly senses a target, and the signal sources configured to indicate vehicle states mainly senses a vehicle's own states, abstracting data from the two based on attributes of the data is conducive to generating multimodal serialized data. The fusioner 210 of the system 20 is configured to fuse the feature data extracted by abstractors 206 and 208 to generate multimodal serialized data. In some embodiments of the invention, the process of multimodal fusion may be implemented by using a transformer neural network, and the abstractors and the fusioner may be built in the transformer neural network. It should be noted that the number of signal sources and abstractors in the invention is not limited to that shown in this figure, and the signal sources and abstractors shown in FIG. 2 are for illustrative purposes only.

The extractor 212 of the system 20 is configured to extract fused features from the multimodal serialized data, and the encoder 214 is configured to encode the fused features to generate encoded information. For example, a one-dimensional vector may be formed based on the extracted features and used as encoded information. The process of extracting features from multimodal serialized data and performing embedded encoding may also be implemented according to the prior art, and details are not repeated herein. In some embodiments of the invention, the process of feature extraction and encoding may be implemented by using a transformer neural network, and the extractors and encoder may be built in the transformer neural network.

The matcher 216 of the system 20 is configured to perform similarity matching between the encoded information and target encoded information, and determine, based on a matching result, whether to retain the set of perception data, where the target encoded information is generated based on perception data for the predetermined scenario. In some embodiments of the invention, for example, if a similarity between the encoded information and the target encoded information is greater than or equal to a threshold, it indicates that the set of perception data from the signal sources 202 and 204 is highly correlated with the predetermined scenario, and thus the set of perception data can be retained.

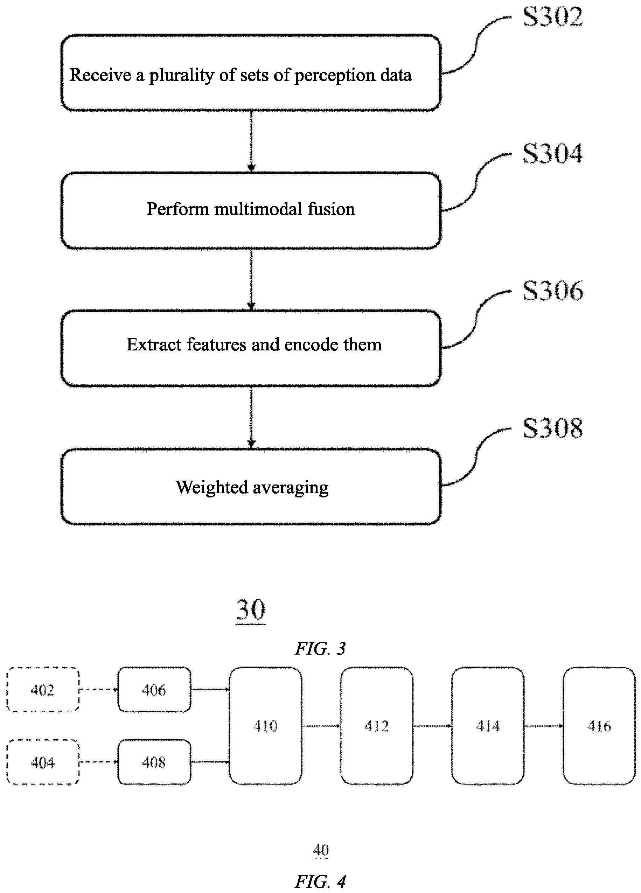

Another aspect of the invention provides a method for generating target encoded information for a predetermined scenario, where the target encoded information is used for extracting perception data for the predetermined scenario. As shown in FIG. 3, a method 30 for generating target encoded information for a predetermined scenario (hereinafter referred to as the method 30) includes the following steps: step S302: receiving a plurality of sets of perception data, where the plurality of sets of perception data are generated by one or more signal sources in the predetermined scenario, and each set has a preset length; step S304: performing multimodal fusion on each of the plurality of sets of perception data to generate a plurality of sets of multimodal serialized data (abbreviated as "Perform multimodal fusion" in FIG. 3); step S306: extracting features from each of the plurality of sets of multimodal serialized data and encoding them to generate a plurality of sets of encoded information (abbreviated as "Extract features and encode them" in FIG. 3); and step S308: performing weighted averaging on each of the plurality of sets of encoded information to generate the target encoded information (abbreviated as "Weighted averaging" in FIG. 3).

In the method 30, corresponding encoded information is generated for each set of perception data for a predetermined scenario in steps S302-S306, and this process may be implemented according to steps S 102-S 106 in the method 10. Due to space limitation, details are not repeated here.

In the method 30, weighted averaging is performed on each of the plurality of sets of encoded information to generate the target encoded information in step S308. Therefore, the target encoded information is further formed based on the corresponding plurality of sets of encoded information generated from the plurality of sets of perception data, so as to prevent incorrect determining of one set of perception data from causing the target encoded information to fail to reflect the features of the predetermined scenario.

Another aspect of the invention provides a system for generating target encoded information for a predetermined scenario, where the target encoded information is used for extracting perception data for the predetermined scenario. As shown in FIG. 4, a system 40 for generating target encoded information for a predetermined scenario (hereinafter referred to as the system 40) includes abstractors 406 and 408, a fusioner 410, an extractor 412, an encoder 414, and a generator 416. Signal sources 402 and 404 are also shown in FIG. 4 in order to clearly illustrate the principles of the invention. The system 40 may be arranged at the server side, so as to facilitate the generation of target encoded information to be sent to the vehicle side.

The abstractors 406 and 408 of the system 40 are configured to receive a plurality of sets of perception data from the signal sources 402 and 404, and abstract each of the plurality of sets of perception data into corresponding feature data, where the plurality of sets of perception data are generated by one or more signal sources in the predetermined scenario, and each set has a preset length. The fusioner 410 is configured to perform multimodal fusion on the feature data corresponding to each set of perception data to generate a plurality of sets of multimodal serialized data. The extractor 412 is configured to extract fused features from each of the plurality of sets of multimodal serialized data. The encoder 414 is configured to encode the fused features separately to generate a plurality of sets of encoded information.

The abstractors 406 and 408, the fusioner 410, the extractor 412, and the encoder 414 of the system 40 can respectively implement the same functions as the abstractors 206 and 208, the fusioner 210, the extractor 212, and the encoder 214 of the system 20, and related content is cited here. Due to space limitation, details are not repeated here.

The generator 416 of the system 40 is configured to perform weighted averaging on each of the plurality of sets of encoded information to generate the target encoded information. Therefore, the target encoded information is further formed based on the corresponding plurality of sets of encoded information generated from the plurality of sets of perception data, so as to prevent incorrect determining of one set of perception data from causing the target encoded information to fail to reflect the features of the predetermined scenario.

According to another aspect of the invention, there is provided a computer-readable storage medium having instructions stored therein, where the instructions, when executed by a processor, cause the processor to perform any one of the method for selecting data for a predetermined scenario by filtering and the method for generating target encoded information for a predetermined scenario as described above. The computer-readable medium in the invention includes various types of computer storage media, and may be any usable medium accessible to a general-purpose or special-purpose computer. For example, the computer-readable medium may include a RAM, a ROM, an EPROM, an EEPROM, a register, a hard disk, a removable hard disk, a CD-ROM or another optical memory, a magnetic disk memory or another magnetic storage device, or any other transitory or non-transitory media that can carry or store expected program code having an instruction or data structure form and be accessible to the general-purpose or special-purpose computer or a general-purpose or special-purpose processor. Data is usually copied magnetically in a disk used herein, while data is usually copied optically by using lasers in a disc. A combination thereof shall also fall within the scope of protection of the computer-readable media. An exemplary storage medium is coupled to a processor, so that the processor can read information from and write information to the storage medium. In an alternative solution, the storage medium may be integrated into the processor. The processor and the storage medium may reside in an ASIC. The ASIC may reside in a user terminal. In an alternative solution, the processor and the storage medium may reside as discrete assemblies in a user terminal.

The foregoing descriptions are merely the embodiments of the invention, but are not intended to limit the scope of protection of the invention. Any feasible variation or replacement conceived by a person skilled in the art within the technical scope disclosed in the invention shall fall within the scope of protection of the invention. Without conflicts, the embodiments of the invention and features in the embodiments may also be combined with each other. The scope of protection of the invention shall be subject to recitations of the claims.

## Claims

1. A method for selecting data for a predetermined scenario by filtering, comprising:
receiving a set of perception data from one or more signal sources;
performing multimodal fusion on the set of perception data to generate multimodal serialized data;
extracting features from the multimodal serialized data and encoding them to generate encoded information;
receiving target encoded information, wherein the target encoded information is generated based on perception data for the predetermined scenario; and
performing similarity matching between the encoded information and the target encoded information, and determining, based on a matching result, whether to retain the set of perception data.

2. The method according to claim 1, wherein the predetermined scenario is any one or a combination of the following: overtaking, avoiding, accelerating, decelerating, changing lanes, emergency stop, and lane line missing.

3. The method according to claim 1 or 2, wherein the one or more signal sources comprise at least one of the following:
signal sources configured to detect a surrounding environment: an image sensor and a lidar; and
signal sources configured to indicate vehicle states: a speed sensor, an acceleration sensor, an accelerator pedal position sensor, a brake pedal position sensor, and a steering angle sensor.

4. The method according to any one of claims 1 to 3, wherein performing multimodal fusion on the set of perception data to generate multimodal serialized data comprises:
abstracting a part of the set of perception data from the signal sources configured to detect the surrounding environment as first feature data;
abstracting a part of the set of perception data from the signal sources configured to indicate vehicle states as second feature data; and
performing feature fusion on the first feature data and the second feature data to generate the multimodal serialized data.

5. The method according to any one of claims 1 to 4, wherein determining, based on a matching result, whether to retain the set of perception data comprises:
retaining the set of perception data if a similarity between the encoded information and the target encoded information is greater than or equal to a threshold.

6. The method according to claim 5, further comprising:
sending the set of perception data for the predetermined scenario for further processing.

7. The method according to any one of claims 1 to 6, wherein the multimodal fusion, the feature extraction, and the encoding are based on a transformer neural network.

8. The method according to any one of claims 1 to 7, wherein the target encoded information is generated based on the perception data with a preset length for the predetermined scenario, and receiving a set of perception data from one or more signal sources comprises:
receiving a perception data stream from one or more signal sources;
dividing the perception data stream into a plurality of sets of perception data based on the preset length; and
extracting a set of perception data from the plurality of sets of perception data.

9. A system for selecting data for a predetermined scenario by filtering, comprising:
an abstractor configured to receive a set of perception data from one or more signal sources, and abstract the set of perception data into corresponding feature data;
a fusioner configured to fuse the feature data to generate multimodal serialized data;
an extractor configured to extract fused features from the multimodal serialized data;
an encoder configured to encode the fused features to generate encoded information; and
a matcher configured to perform similarity matching between the encoded information and target encoded information, anddetermine, based on a matching result, whether to retain the set of perception data, wherein the target encoded information is generated based on perception data for the predetermined scenario.

10. A method for generating target encoded information for a predetermined scenario, wherein the target encoded information is used for extracting perception data for the predetermined scenario, and the method comprises:
receiving a plurality of sets of perception data, wherein each of the plurality of sets of perception data is generated by one or more signal sources in the predetermined scenario and has a preset length;
performing multimodal fusion on each of the plurality of sets of perception data to generate a plurality of sets of multimodal serialized data;
extracting features from each of the plurality of sets of multimodal serialized data and encoding them to generate a plurality of sets of encoded information; and
performing weighted averaging on each of the plurality of sets of encoded information to generate the target encoded information.

11. A system for generating target encoded information for a predetermined scenario, wherein the target encoded information is used for extracting perception data for the predetermined scenario, and the system comprises:
an abstractor configured to receive a plurality of sets of perception data, and abstract each of the plurality of sets of perception data into corresponding feature data, wherein each of the plurality of sets of perception data is generated by one or more signal sources in the predetermined scenario and has a preset length;
a fusioner configured to perform multimodal fusion on the feature data corresponding to each set of perception data to generate a plurality of sets of multimodal serialized data;
an extractor configured to extract fused features from each of the plurality of sets of multimodal serialized data;
an encoder configured to encode the fused features separately to generate a plurality of sets of encoded information; and
a generator configured to perform weighted averaging on each of the plurality of sets of encoded information to generate the target encoded information.

12. A computer-readable storage medium having instructions stored therein, wherein the instructions, when executed by a processor, cause the processor to perform a method according to any one of claims 1 to 8 and 10.
